# FASCICULE DE BREVET EUROPEEN

(11) **EP 2 909 574 B1**
(45) Date de publication et mention de la délivrance du brevet: **18.04.2018**
(21) Numéro de dépôt: 13789860.7
(22) Date de dépôt: 18.10.2013
(51) Int. Cl.: G01B 11/06, B29C 49/78, G01N 21/90

(54) **INSTALLATION POUR MESURER L'EPAISSEUR DE LA PAROI DE RECIPIENTS**
EINRICHTUNG ZUR MESSUNG DER WANDDICKE VON BEHÄLTERN
FACILITY FOR MEASURING THE THICKNESS OF THE WALL OF CONTAINERS

(30) Priorité: 18.10.2012 FR 1259940
(43) Date de publication de la demande: 26.08.2015
(73) Titulaire: Tiama, 69390 Vourles (FR)
(72) Inventeur: LECONTE, Marc, F-69700 Loire Sur Rhone (FR)
(74) Mandataire: Thibault, Jean-Marc
(86) Numéro de dépôt international: PCT/FR2013/052490
(87) Numéro de publication internationale: WO 2014/060707

(56) Documents cités:
- WO-A1-2012/110749
- FR-A5- 2 069 220
- US-A- 4 822 171
- US-A1- 2004 027 579

## Description

La présente invention concerne le domaine technique de l'inspection optoélectronique de récipients à caractère transparent ou translucide, tels que des bouteilles, des pots ou des flacons, en vue de détecter des défauts de répartition de matière et en particulier des défauts d'épaisseur appelés habituellement défauts de type mince.

Dans le domaine technique de la fabrication des récipients en verre, il est connu qu'il existe un risque que les récipients présentent une ou plusieurs zones localisées de mauvaise répartition de matière affectant l'esthétique ou plus grave, la résistance mécanique des récipients. Il est connu que les défauts de faible épaisseur ou « minces » se forment principalement dans des régions spécifiques du récipient qui présentent des rayons de courbure différents tels que l'épaule ou le jable du récipient.

Pour mesurer l'épaisseur de la paroi d'une bouteille, il est connu une méthode dite par triangulation consistant à projeter un faisceau lumineux sur la paroi de l'article avec un angle d'incidence non nul, et à collecter les faisceaux lumineux réfléchis par la surface extérieure et la surface intérieure de la paroi. Ces réflexions lumineuses sur ces deux surfaces se font selon les lois de la réflexion spéculaire des faisceaux incidents, c'est-à-dire de manière symétrique au faisceau incident par rapport à la normale à la surface au point d'impact du faisceau incident.

Il est connu par exemple par le brevet EP 0 320 139 et tel qu'illustré à la **Fig. 1****,** de mesurer l'épaisseur du récipient **2** en envoyant un faisceau lumineux **B** sur la paroi du récipient en suivant un angle tel qu'une partie **C** du faisceau lumineux est réfléchie par la surface extérieure de la paroi et qu'une partie du faisceau est réfractée dans la paroi puis réfléchie **D** par la surface intérieure de la paroi. Les rayons réfléchis **C, D** par les surfaces intérieure et extérieure de la paroi sont récupérés par une lentille **E** afin d'être envoyés sur un capteur de lumière linéaire **F.** Le plan contenant l'axe optique, le capteur linéaire et le rayon médian du faisceau incident est appelé couramment le plan de triangulation. L'épaisseur de la paroi du récipient est mesurée en fonction de la séparation, au niveau du capteur de lumière, entre les faisceaux réfléchis par les surfaces intérieure et extérieure de la paroi. Le récipient est entraîné en rotation selon un tour pour mesurer son épaisseur selon l'une de ses sections droites transversales. De manière avantageuse, la section transversale d'inspection est située dans une zone du récipient présentant un grand risque de formation de minces tels que le jable ou l'épaule.

Une alternative à la technique précédente consiste à utiliser un capteur matriciel à la place du capteur linéaire afin de mesurer l'épaisseur de verre et donc sa répartition selon toute la hauteur du champ résultant couvert par le capteur matriciel muni d'un objectif. Dans cette configuration, le faisceau lumineux produit par la source est étendu perpendiculairement au plan de triangulation de manière à couvrir verticalement le champ du capteur matriciel.

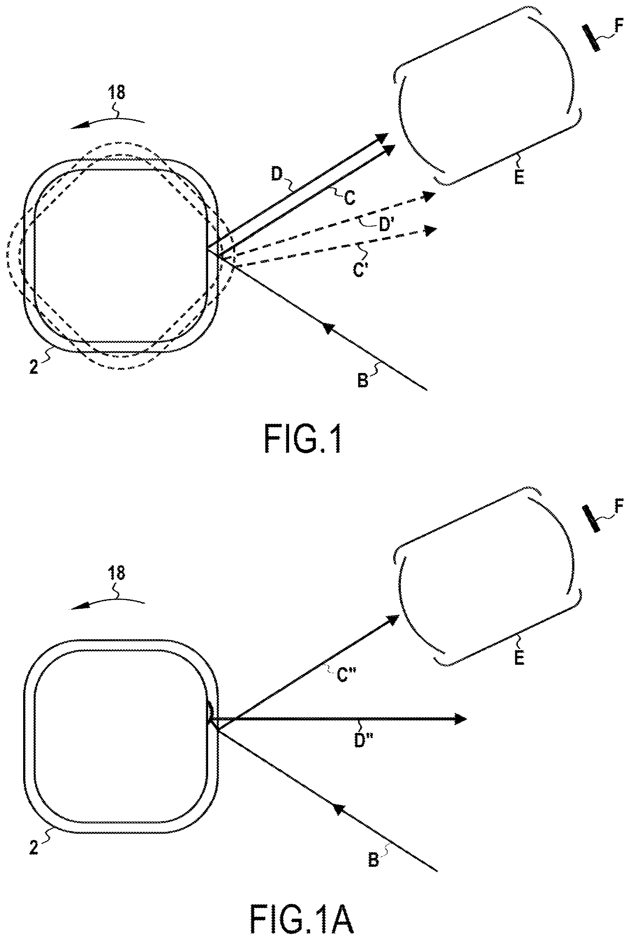

De par la forme géométrique du récipient à contrôler et/ou du fait du non parallélisme entre-elles des surfaces intérieure et extérieure de la paroi à mesurer, les écarts de directions des deux réflexions spéculaires peuvent varier de plusieurs degrés. Ainsi, comme illustré à la **Fig. 1****,** la forme géométrique de l'article peut faire varier de façon importante la position du point d'impact du faisceau incident de sorte que les rayons réfléchis **C', D',** peuvent présenter de fortes déviations par rapport à l'axe optique et les points dont ils sont issus peuvent présenter un grand écart de position. De même, comme illustré à la **Fig. 1A****,** le non parallélisme entre les surfaces intérieure et extérieure de la paroi à mesurer peut conduire à des rayons réfléchis **C", D"** présentant de fortes déviations par rapport à l'axe optique.

Il est également connu par le brevet FR 2 069 220, un procédé de mesure de l'épaisseur d'un objet consistant à projeter un faisceau lumineux étroit sur l'objet de façon que le faisceau lumineux réalise une tache lumineuse successivement sur la face externe et la face interne de l'objet. Une lentille est disposée par rapport à l'objet pour former des images réelles de la lumière réfléchie directement ou réfléchie de manière diffuse, par les surfaces intérieure et extérieure, comme deux points espacés de lumière concentrée sur un écran. La distance entre ces deux taches est mesurée par tout dispositif comme par exemple, un vidicom ou un analyseur d'images.

Selon une variante préférée de réalisation, la lentille est disposée de manière à ne pas recevoir les rayons lumineux qui sont directement réfléchis par les surfaces intérieure et extérieure suivant des angles égaux à leurs angles d'incidence sur ces surfaces. Cette technique, qui prévoit de former des images réelles de la lumière réfléchie de manière diffuse, ne peut pas être appliquée notamment pour le contrôle de l'épaisseur des parois de bouteilles puisque la lumière n'est pas réfléchie sur les parois de manière diffuse.

Ce brevet prévoit toutefois le cas où la lentille est prévue pour récupérer un rayon réfléchi directement. Ce brevet précise cependant que dans un tel cas, un petit changement de l'angle de surface de l'objet change l'angle du rayon réfléchi, nécessitant un mouvement important de la lentille pour récupérer ce rayon réfléchi.

La technique décrite dans ce brevet n'est pas applicable industriellement car il est inconcevable de déplacer la lentille pour récupérer les rayons réfléchis.

Il apparaît donc le besoin de pouvoir disposer d'une installation pour mesurer l'épaisseur de la paroi de récipients transparents ou translucides fonctionnant pour une gamme étendue de récipients et/ou dans des conditions de déviation importantes des faisceaux réfléchis par la paroi et/ou dans des conditions d'écart de position important des deux points de réflexion.

Toutefois, dans le domaine de la conception d'optiques de focalisation telles que des objectifs, il est connu que les conditions extrêmes, notamment la récupération de rayons faisant un angle important avec l'axe optique et/ou issus de points du plan objet éloignés de l'axe optique, ou bien des incidences fortes sur les capteurs d'image, conduisent à des aberrations optiques et des pertes de lumière, qui nuisent au fonctionnement du capteur et de l'objectif ou bien sont coûteuses et complexes à corriger.

La présente invention vise à remédier aux inconvénients de l'art antérieur en proposant une installation performante et économique pour mesurer l'épaisseur de la paroi de récipients transparents ou translucides fonctionnant pour une gamme étendue de récipients et/ou dans des conditions de déviations importantes des faisceaux réfléchis par la paroi et/ou des conditions d'écart de position important des deux points de réflexion.

Pour atteindre un tel objectif, l'installation pour mesurer l'épaisseur de la paroi de récipients transparents ou translucides, délimitée entre une surface extérieure et une surface intérieure, comporte :
- une source de lumière produisant un faisceau lumineux envoyé pour frapper la surface extérieure de la paroi suivant un angle incident tel qu'une partie du faisceau lumineux est réfléchie par la surface extérieure de la paroi et qu'une partie du faisceau est réfractée dans la paroi puis réfléchie par la surface intérieure de la paroi,
- un capteur de lumière de dimension, placé dans un plan de détection, et récupérant la lumière pour la convertir en des signaux électriques,
- un système optique de récupération et de focalisation sur le plan de détection du capteur de lumière, des faisceaux lumineux réfléchis par les surfaces extérieure et intérieure de la paroi,
- une unité de traitement reliée au capteur de lumière et adaptée pour déterminer l'épaisseur de la paroi à partir des signaux électriques délivrés par le capteur de lumière.

Selon l'invention, le système optique de récupération et de focalisation conjugue un champs objet de dimension Co avec le capteur de lumière de dimension Ci de sorte que Ci < 0.5 Co, et comporte, disposés sur l'axe optique successivement dans le sens de propagation des faisceaux réfléchis par les deux surfaces :
- un premier objectif ayant son plan objet situé au voisinage de l'impact du faisceau lumineux incident avec la paroi et adapté pour récupérer les faisceaux lumineux réfléchis de manière spéculaire par les surfaces extérieure et intérieure de la paroi selon an angle par rapport à l'axe optique pouvant atteindre au moins 20° et pouvant aller jusqu'à 40°,
- un écran diffusant au moins translucide situé dans le plan image du premier objectif, de manière à matérialiser les faisceaux lumineux récupérés par le premier objectif sous la forme de taches lumineuses,
- un deuxième objectif ayant dans son plan objet, l'écran diffusant et dans son plan image, le capteur de lumière, de manière à réaliser sur le capteur de lumière, une image de l'écran diffusant dans laquelle se distinguent les taches lumineuses.

De plus, l'installation selon l'invention peut comporter en outre en combinaison au moins l'une et/ou l'autre des caractéristiques additionnelles suivantes :
- le premier objectif conjugue la paroi et l'écran diffusant avec un grandissement supérieur à 1 et de préférence autour de 1,5, et est apte à récupérer et focaliser sur l'écran diffusant, des rayons entrant dans sa pupille avec un angle par rapport à l'axe optique pouvant atteindre au moins 20° et pouvant aller jusqu'à 40°,
- l'écran est diffusant dans sa masse ou en surface, le pouvoir de diffusion étant adapté pour que des rayons diffusés soient collectés par le deuxième objectif,
- la source de lumière produit un faisceau allongé perpendiculairement au plan de triangulation et étroit dans la direction orthogonale,
- le capteur de lumière est un capteur d'image linéaire de préférence perpendiculaire à l'axe optique du système optique de récupération et de focalisation, et situé dans le plan de triangulation ou un capteur matriciel d'image situé de préférence perpendiculairement à l'axe optique,
- l'unité de traitement est apte à déterminer, dans l'image produite par le capteur de lumière, la position des taches produites par les deux faisceaux lumineux illuminant l'écran diffusant, et déduire de leur séparation, l'épaisseur de la paroi en au moins une section du récipient.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue schématique illustrant les inconvénients d'une installation de l'art antérieur.
La **Figure 1A** est une vue schématique illustrant les inconvénients d'une installation de l'art antérieur pour la mesure de l'épaisseur d'un objet dont les parois ne sont pas parallèles.
La **Figure 2** est une vue montrant de manière schématique une installation conforme à l'invention de mesure de la paroi d'un récipient illustré en coupe.
La **Figure 3** illustre le principe optique du système optique de récupération et de focalisation des faisceaux, mis en oeuvre dans l'installation illustrée à la **Fig. 2****.**
La **Figure 4** illustre un exemple de cheminement des faisceaux lumineux dans le système optique de récupération et de focalisation des faisceaux illustré à la **Fig. 3****.**
La **Figure 5** est un exemple d'image obtenue par l'installation de mesure conforme à l'invention.

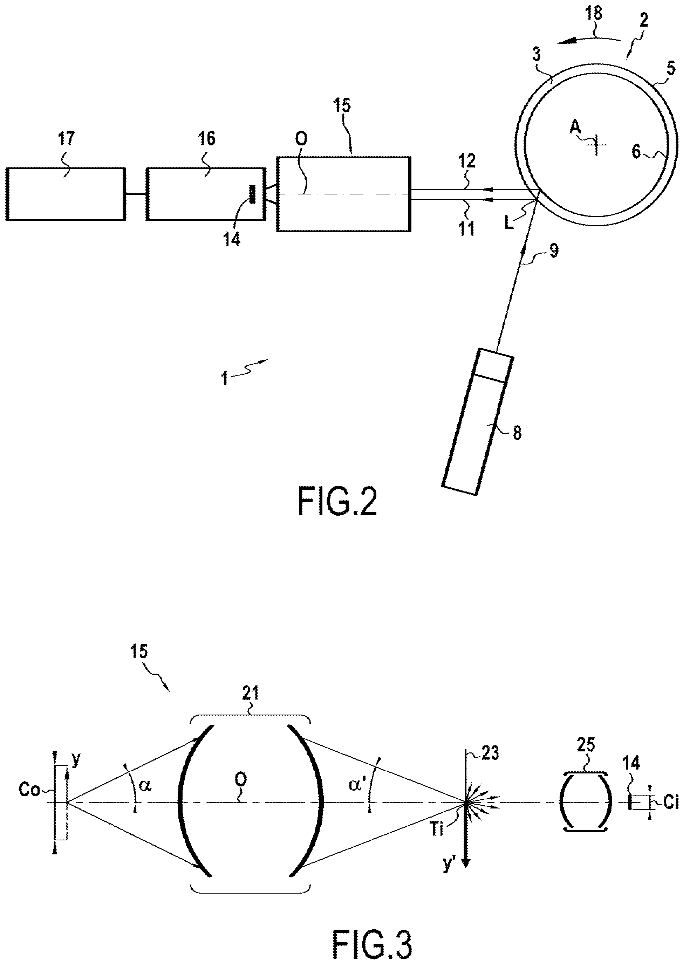

La **Fig. 2** illustre de manière schématique une installation **1** permettant de déceler des défauts de répartition de matière sur des récipients transparents ou translucides **2** présentant un axe central **A.** Tel que cela ressort plus précisément de la **Fig. 2****,** chaque récipient **2** présente une paroi verticale **3** délimitée entre une surface extérieure **5** et une surface intérieure **6.**

Conformément à l'invention, l'installation **1** est adaptée pour mesurer l'épaisseur de la paroi **3** de récipients **2** tels que des récipients en verre, comme par exemple des bouteilles, pots ou flacons.

De manière avantageuse, l'installation **1** est adaptée pour observer une zone ou une région d'inspection s'étendant sur toute la circonférence du récipient et présentant une hauteur prise selon l'axe central **A** englobant la zone dans laquelle sont susceptibles d'apparaître un défaut de répartition de matière. Par exemple, la région d'inspection correspond au jable ou à l'épaule du récipient.

L'installation **1** comporte une source lumineuse **8** adaptée pour envoyer un faisceau lumineux **9** sur la paroi **3** du récipient sous la forme d'une ligne lumineuse **L** ayant une longueur déterminée selon la hauteur du récipient prise selon l'axe central **A.** Par exemple, la source lumineuse **8** est un laser. Dans le cas où la région d'inspection est une surface bidimensionnelle, la longueur de la ligne lumineuse **L** prise selon l'axe central **A** correspond au moins à la hauteur de la région d'inspection.

Le faisceau lumineux **9** est envoyé suivant un angle tel qu'une partie **11** du faisceau lumineux **9** est réfléchie par la surface extérieure **5** et qu'une partie **12** du faisceau **9** est réfractée dans la paroi **3** puis réfléchie par la surface intérieure **6** de la paroi. Tel que cela ressort plus précisément de la **Fig. 2****,** l'envoi du faisceau lumineux **9** conduit à l'obtention d'un faisceau réfléchi **11** par la surface extérieure **5** et un faisceau réfléchi **12** par la surface intérieure **6.**

L'installation comporte également un capteur de lumière **14** apte à récupérer à l'aide d'un système optique de récupération et de focalisation **15,** les faisceaux réfléchis **11, 12** de manière spéculaire par les surfaces respectivement extérieure **5** et intérieure **6.** Il est rappelé qu'une réflexion est dite spéculaire lorsque le rayonnement réfléchi **11, 12** par la surface est réfléchi selon une seule et même direction, selon les lois de Descartes, c'est-à-dire que le faisceau réfléchi est symétrique au faisceau incident par rapport à la normale. En d'autres termes, l'angle incident entre le faisceau incident et la normale à la surface est égal à l'angle de réflexion défini entre le faisceau réfléchi et la normale à la surface. Le système optique de récupération et de focalisation **15** qui sera décrit plus en détail dans la suite de la description comporte un axe optique **O** contenu dans le plan de triangulation contenant également le rayon médian du faisceau lumineux incident **9**. Le capteur de lumière **14** est soit un capteur d'image linéaire de préférence mais non exclusivement perpendiculaire à l'axe optique **O** du système optique de récupération et de focalisation **15,** en étant situé dans le plan de triangulation, soit un capteur matriciel d'image situé de préférence mais non exclusivement perpendiculairement à l'axe optique **O.** Le capteur de lumière **14** qui fait partie d'une caméra linéaire ou matricielle **16** convertit la lumière en signaux électriques.

La caméra **16** est reliée à une unité **17** d'acquisition et de traitement permettant d'acquérir et de traiter les images prises par le capteur de lumière **14.** La caméra **16** et l'unité d'acquisition et de traitement **17** ne sont pas décrits plus précisément car ils sont bien connus de l'homme du métier.

L'installation d'inspection **1** comporte également un système **18** de mise en rotation des récipients **2** selon l'axe central **A** sur un tour de manière à permettre l'inspection des récipients selon toute sa circonférence, par la prise d'images successives lors de la rotation des récipients.

La **Fig. 3** illustre un exemple de réalisation du système optique de récupération et de focalisation **15.** Le système optique de récupération et de focalisation **15** conjugue un champ objet de dimension Co = 2.y avec le capteur de lumière **14** de sorte que le capteur de lumière possède une dimension **Ci** inférieur à 0,5 fois la dimension du champ objet soit Cᵢ < 0,5.Co. Le système optique de récupération et de focalisation **15** comporte :
- un premier objectif **21** ayant son plan objet situé au voisinage de l'impact du faisceau lumineux incident **9** avec la paroi **3** et adapté pour récupérer les faisceaux lumineux réfléchis par les surfaces extérieure **5** et intérieure **6** de la paroi,

- un écran diffusant **23** au moins translucide situé dans le plan image du premier objectif **21,** de manière à matérialiser les faisceaux lumineux récupérés par le premier objectif **21,** sous la forme de taches lumineuses **Ti,**
- et un deuxième objectif **25** comportant comme plan objet, l'écran diffusant **23** et comme plan image, le capteur de lumière **14,** de manière à réaliser sur le capteur de lumière, une image de l'écran diffusant **23** dans laquelle se distinguent les taches lumineuses.

Le premier objectif **21,** l'écran diffusant **23** et le deuxième objectif **25** sont disposés sur l'axe optique **O** successivement dans le sens de propagation des faisceaux réfléchis par les deux surfaces **5, 6.**

Le premier objectif **21** conjugue la paroi **3** du récipient **2** et l'écran diffusant **23** avec un grandissement supérieur à 1 et de préférence autour de 1,5.

Le premier objectif **21** récupère et focalise sur l'écran diffusant **23**, des rayons entrants dans sa pupille d'entrée avec un angle α par rapport à l'axe optique **O** pouvant atteindre au moins 20° et pouvant aller jusqu'à 40°. Le premier objectif **21** récupère ainsi les faisceaux réfléchis **11, 12** par les surfaces extérieure **5** et intérieure **6.**

L'écran diffusant **23** matérialise les faisceaux lumineux qui arrivent dans le plan image du premier objectif **21.** En d'autres termes, les faisceaux lumineux interceptés par l'écran diffusant **23** sont diffusés soit dans sa masse soit en surface par l'une de ses surfaces. Les faisceaux lumineux récupérés par l'écran diffusant **23** sont ainsi matérialisés sous la forme de taches lumineuses **Ti**. La lumière après avoir traversé l'écran diffusant **23** se propage selon un lob d'émission qui dépend du pouvoir diffusant de l'écran **23.** Les caractéristiques de diffusion de l'écran **23** sont choisies de façon que la lumière soit diffusée en particulier selon la direction du capteur de lumière **14.** Ainsi, en observant l'écran diffusant **23** depuis le côté opposé à l'incidence des faisceaux, il est possible d'observer les taches lumineuses ainsi formées sous des angles en relation avec le lob d'émission.

Le deuxième objectif **25** permet de reprendre les taches lumineuses formées sur l'écran et de les imager sur le capteur de lumière **14**. A cet égard, le plan objet du deuxième objectif **25** est l'écran diffusant **23** tandis que son plan image correspond au plan de détection du capteur d'image **14.**

Tel que cela ressort de la description qui précède, le système optique de récupération et de focalisation **15** permet d'obtenir un grand champ d'observation et un angle d'ouverture important. Ainsi, le système optique de récupération et de focalisation **15** transmet jusqu'au capteur de lumière **14**, un rayon entrant avec un angle par rapport à l'axe optique **O** pouvant aller jusqu'à 40° tout en conjuguant un champ objet dont les dimensions latérales sont au moins double des dimensions latérales du capteur de lumière **14.**

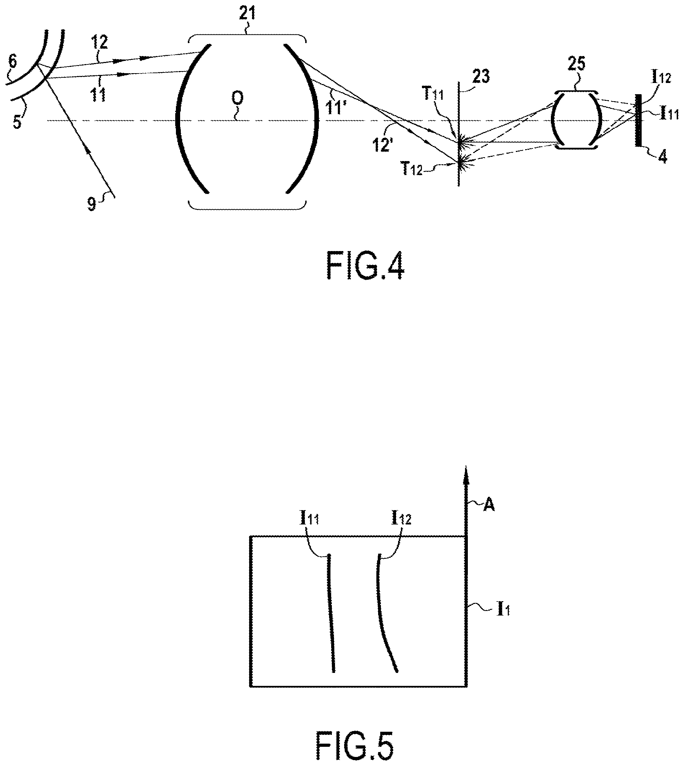

La **Fig. 4** permet d'illustrer le cheminement des faisceaux lumineux réfléchis par la paroi **3** jusqu'au capteur de lumière **14.** Le premier objectif **21** permet de récupérer les rayons **11, 12** réfléchis respectivement par les surfaces extérieure **5** et intérieure **6** et de les transmettre de manière que les rayons sortants **11'**, **12'** forment respectivement sur l'écran diffusant des taches lumineuses **T₁₁**, **T₁₂**.

L'image ainsi formée sur l'écran diffusant **23** et comportant les taches lumineuses **T₁₁**, **T₁₂** est reprise pour être imagée à l'aide du second objectif **25,** sur le capteur de lumière **14.**

La **Fig. 5** illustre un exemple d'une image **I₁** prise par la caméra **16** pour une position angulaire déterminée du récipient **2** par rapport au capteur de lumière **14** qui, dans l'exemple illustré, est de type matricielle. L'image **I₁** fait apparaître d'une part, l'image **I₁₁** de la tache lumineuse **T₁₁** résultant de la matérialisation du faisceau réfléchi **11** sur la surface extérieure **5** et d'autre part, l'image **I₁₂** de la tache lumineuse **T₁₂** résultant de la matérialisation du faisceau réfléchi **12** sur la surface intérieure **6.** Les images **I₁₁, I₁₂** des taches lumineuse **T₁₁, T₁₂** apparaissent sur l'image **I₁** selon deux lignes lumineuses présentant une longueur selon l'axe central **A** correspondant à la hauteur de la région d'inspection du récipient et se trouvent écartées l'une de l'autre, selon une direction perpendiculaire à l'axe **A,** d'une distance correspondant à l'épaisseur de la paroi **3.** Il est à noter que dans le cas d'un capteur de lumière linéaire, les images I**₁₁**, **I₁₂** des taches lumineuses apparaissent sous la forme de deux points lumineux séparés d'une valeur correspondant à l'épaisseur de la paroi **3.**

L'unité d'acquisition et de traitement **17** est adaptée pour prendre des images successives de la paroi **3** du récipient **2** lors de la rotation du récipient **2** sur un tour. En d'autres termes, l'unité d'acquisition et de traitement **17** prend deux images successives pour un pas de rotation déterminé du récipient, par exemple de l'ordre de 1 mm selon la circonférence du récipient **2.** Classiquement, l'unité d'acquisition et de traitement **17** traite les mesures d'épaisseur en recherchant si l'une des mesures d'épaisseur est inférieure à une valeur critique d'épaisseur minimale. Dans le cas où au moins une mesure d'épaisseur est inférieure à la valeur critique d'épaisseur minimale, l'unité d'acquisition et de traitement **17** délivre un signal de défaut permettant de signaler le récipient comme défectueux.

L'invention n'est pas limitée aux exemples décrits et représentés car diverses modifications peuvent y être apportées sans sortir de son cadre.

## Revendications

1. Installation pour mesurer l'épaisseur de la paroi (**3**) de récipients transparents ou translucides (**2**), délimitée entre une surface extérieure (**5**) et une surface intérieure (**6**), comportant :
- une source de lumière (**8**) produisant un faisceau lumineux (**9**) envoyé pour frapper la surface extérieure (**5**) de la paroi (**3**) suivant un angle incident tel qu'une partie du faisceau lumineux est réfléchie par la surface extérieure (**5**) de la paroi et qu'une partie du faisceau est réfractée dans la paroi puis réfléchie par la surface intérieure (**6**) de la paroi,
- un capteur de lumière (**14**) de dimension (**Ci**), placé dans un plan de détection, et récupérant la lumière pour la convertir en des signaux électriques,
- un système optique de récupération et de focalisation **(15)** sur le plan de détection du capteur de lumière (**14**), des faisceaux lumineux réfléchis par les surfaces extérieure et intérieure de la paroi,
- une unité de traitement (**17**) reliée au capteur de lumière (**16**) et adaptée pour déterminer l'épaisseur de la paroi (**3**) à partir des signaux électriques délivrés par le capteur de lumière,
**caractérisé en ce que** le système optique de récupération et de focalisation (**15**) conjugue un champ objet de dimension Co avec le capteur de lumière (**14**) de dimension Ci de sorte que Ci < 0.5 Co et comporte, disposés sur l'axe optique (**O**) successivement dans le sens de propagation des faisceaux réfléchis par les deux surfaces (**5, 6**) :
• un premier objectif (**21**) ayant son plan objet situé au voisinage de l'impact du faisceau lumineux incident (**9**) avec la paroi (**3**) et adapté pour récupérer les faisceaux lumineux réfléchis de manière spéculaire par les faces extérieure (**5**) et intérieure (**6**) de la paroi, selon un angle (α) par rapport à l'axe optique (**O**) pouvant atteindre au moins 20° et pouvant aller jusqu'à 40°,
• un écran diffusant (**23**) au moins translucide situé dans le plan image du premier objectif (**21**), de manière à matérialiser les faisceaux lumineux récupérés par le premier objectif sous la forme de taches lumineuses (**Ti**),
• un deuxième objectif (**25**) ayant dans son plan objet, l'écran diffusant (**23**) et dans son plan image, le capteur de lumière (**14**), de manière à réaliser sur le capteur de lumière (**14**), une image de l'écran diffusant (**23**) dans laquelle se distinguent les taches lumineuses.

2. Installation selon la revendication 1, **caractérisée en ce que** le premier objectif (**21**) conjugue la paroi et l'écran diffusant (**23**) avec un grandissement supérieur à 1 et de préférence autour de 1,5, et est apte à récupérer et focaliser sur l'écran diffusant (**23**), des rayons entrant dans sa pupille avec un angle par rapport à l'axe optique (**O**) pouvant atteindre au moins 20° et pouvant aller jusqu'à 40°.

3. Installation selon la revendication 1, **caractérisée en ce que** l'écran (**23**) est diffusant dans sa masse ou en surface, le pouvoir de diffusion étant adapté pour que des rayons diffusés soient collectés par le deuxième objectif (**25**).

4. Installation selon la revendication 1, **caractérisée en ce que** la source de lumière (**8**) produit un faisceau (**9**) allongé perpendiculairement au plan de triangulation et étroit dans la direction orthogonale.

5. Installation selon la revendication 1, **caractérisée en ce que** le capteur de lumière (**8**) est un capteur d'image linéaire de préférence perpendiculaire à l'axe optique (**O**) du système optique de récupération et de focalisation (**15**), et situé dans le plan de triangulation ou un capteur matriciel d'image situé de préférence perpendiculairement à l'axe optique (**O**).

6. Installation selon la revendication 1, **caractérisée en ce que** l'unité de traitement (**17**) est apte à déterminer, dans l'image produite par le capteur de lumière (**14**), la position des taches produites par les deux faisceaux lumineux illuminant l'écran diffusant (**23**), et déduire de leur séparation, l'épaisseur de la paroi (**3**) en au moins une section du récipient.

## Patentansprüche

1. Einrichtung zum Messen der Dicke der Wand (3) von transparenten oder lichtdurchlässigen Behältern (2), die zwischen einer Außenfläche (5) und einer Innenfläche (6) begrenzt ist, umfassend:
eine Lichtquelle (8), die einen Lichtstrahl (9) erzeugt, der geschickt wird, um auf die Außenfläche (5) der Wand (3) in einem derartigen Winkel zu treffen, dass ein Teil des Lichtstrahls von der Außenfläche (5) der Wand reflektiert wird und dass ein Teil des Strahls in der Wand gebrochen und dann von der Innenfläche (6) der Wand reflektiert wird,
- einen Lichtsensor (14) der Abmessung (Ci), der in einer Erfassungsebene angeordnet ist und das Licht zurückgewinnt, um es in elektrische Signale umzuwandeln,
- ein optisches System zum Zurückgewinnen und zum Fokussieren (15) der Lichtstrahlen, die von der Innen- und Außenfläche der Wand reflektiert werden, auf der Erfassungsebene des Lichtsensors (14),
- eine Bearbeitungseinheit (17), die mit dem Lichtsensor (16) verbunden ist und geeignet ist, die Dicke der Wand (3) aus den elektrischen Signalen zu bestimmen, die von dem Lichtsensor abgegeben werden,
**dadurch gekennzeichnet, dass** das optische System zum Zurückgewinnen und zum Fokussieren (15) ein Objektfeld der Abmessung Co mit dem Lichtsensor (14) der Abmessung Ci derart verknüpft, dass Ci < 0,5 Co ist und auf der optischen Achse (O) nacheinander in der Ausbreitungsrichtung der Strahlen, die von den zwei Flächen (5, 6) reflektiert werden, angeordnet aufweist:
• ein erstes Objektiv (21), dessen Objektebene sich in der Nähe des Auftreffens des einfallenden Lichtstrahls (9) auf die Wand (3) befindet und das geeignet ist, die Lichtstrahlen wiederzugewinnen, die von der Außenfläche (5) und Innenfläche (6) spiegelbildlich in einem Winkel (α) in Bezug auf die optische Achse (O) von bis zu mindestens 20° und bis zu 40° reflektiert werden,
• einen zumindest durchscheinenden Streuschirm (23), der in der Bildebene des ersten Objektivs (21) derart angeordnet ist, um die Lichtstrahlen, die von dem ersten Objektiv zurückgewonnen werden, in Form von Leuchtflecken (Ti) zu materialisieren,
• ein zweites Objektiv (25), das in seiner Objektebene den Streuschirm (23) und in seiner Bildebene den Lichtsensor (14) derart aufweist, um an dem Lichtsensor (14) ein Bild des Streuschirms (23) zu erstellen, in dem die Leuchtflecken unterschieden werden.

2. Einrichtung gemäß Anspruch 1, **dadurch gekennzeichnet, dass** das erste Objektiv (21) die Wand und den Streuschirm (23) mit einer Vergrößerung von über 1 und vorzugsweise von etwa 1,5, verknüpft und geeignet ist, Strahlen, die in seine Pupille mit einem Winkel in Bezug auf die optische Achse (O) von mindestens 20° und bis zu 40° eintreten, wiederzugewinnen und auf den Streuschirm (23) zu fokussieren.

3. Einrichtung gemäß Anspruch 1, **dadurch gekennzeichnet, dass** der Schirm (23) in seiner Masse oder auf der Oberfläche diffundierend ist, wobei die Diffusionsfähigkeit geeignet ist, damit die diffundierten Strahlen von dem zweiten Objektiv (25) gesammelt werden.

4. Einrichtung gemäß Anspruch 1, **dadurch gekennzeichnet, dass** die Lichtquelle (8) einen Strahl (9) erzeugt, der senkrecht zur Triangulationsebene länglich und in der orthogonalen Richtung schmal ist.

5. Einrichtung gemäß Anspruch 1, **dadurch gekennzeichnet, dass** der Lichtsensor (8) ein Linearbildsensor, der vorzugsweise senkrecht zu der optischen Achse (O) des optischen Systems zum Zurückgewinnen und zum Fokussieren (15) ist, und in der Triangulationsebene angeordnet ist, oder ein Matrixbildsensor ist, der vorzugsweise senkrecht zu der optischen Achse (O) angeordnet ist.

6. Einrichtung gemäß Anspruch 1, **dadurch gekennzeichnet, dass** die Bearbeitungseinheit (17) geeignet ist, in dem Bild, das von dem Lichtsensor (14) erzeugt wird, die Position der Flecken, die von den zwei Lichtstrahlen erzeugt werden, die den Streuschirm (23) beleuchten, zu bestimmen und aus ihrer Trennung die Dicke der Wand (3) in mindestens einem Abschnitt des Behälters abzuleiten.

## Claims

1. A facility for measuring the thickness of the wall (**3**) of transparent or translucent containers (**2**), delimited between an outer surface (**5**) and an inner surface (**6**), including:
- a light source (**8**) producing a light beam (**9**) sent to impinge the outer surface (**5**) of the wall (**3**) according to an angle of incidence such that a portion of the light beam is reflected by the outer surface (**5**) of the wall and that a portion of the beam is refracted in the wall and then reflected by the inner surface (**6**) of the wall,
- a light sensor (**14**) of dimension (**Ci**), placed on a detection plane, and collecting the light for converting it into electric signals,
- an optical system (**15**), on the detection plane of the light sensor (**14**), for collecting and focusing light beams reflected on the outer and inner surfaces of the wall,
- a processing unit (**17**) connected to the light sensor (**16**) and adapted for determining the thickness of the wall (**3**) from electric signals delivered by the light sensor,
**characterized in that** the optical collecting and focusing system (**15**) combines an object field of dimension Co with the light sensor (**14**) of dimension Ci so that Ci < 0.5 Co and includes, positioned on the optical axis (**O**) successively in the propagation direction, beams reflected by both surfaces (**5, 6**):
- a first objective (**21**) having is object plane located in the vicinity of the impact of the incident light beam (**9**) with the wall (**3**) and adapted for collecting the light beams reflected specularly by the outer (**5**) and inner (**6**) of the wall, with an angle (α) relatively to the optical axis (**O**) which may attain at least 20° and it which may range up to 40°.
- an at least translucent diffusing screen (**23**) located in the image plane of the first objective (**21**), so as to physically represent the light beams collected by the first objective as hot spots (**Ti**),
- a second objective (**25**) having in its object plane, the diffusing screen (**23**) and in its image plane, the light sensor (**14**), so as to produce on the light sensor (**14**), an image of the diffusing screen (**23**) on which the hot spots are distinguished.

2. The facility according to claim 1, **characterized in that** the first objective (**21**) combines the wall and the diffusing screen (**23**) with a magnification of more than 1 and preferably around 1.5, and is able to collect and focus on the diffusing screen (**23**), rays entering its pupil with an angle relatively to the optical axis (**O**) which may attain at least 20° and it which may range up to 40°.

3. The facility according to claim 1, **characterized in that** the screen (**23**) is diffusive in its bulk or at its surface, the scattering being adapted so that the scattered rays are collected by the second objective (**25**).

4. The facility according to claim 1, **characterized in that** the light source (**8**) produces a beam (**9**) perpendicularly elongated to the triangulation plane and narrow in the orthogonal direction.

5. The facility according to claim 1, **characterized in that** the light sensor (**8**) is either a linear image sensor preferably perpendicular to the optical axis (**O**) of the optical collecting and focusing system (**15**), and located in the triangulation plane or an image array sensor preferably located perpendicularly to the optical axis (**O**).

6. The facility according to claim 1, **characterized in that** the processing unit (**17**) is able to determine, in the image produced by the light sensor (**14**), the position of spots produced by both light beams illuminating the diffusing screen (**23**), and to infer from their separation, the thickness of the wall (**3**) in at least one section of the container.
